(19) **Europäisches Patentamt / European Patent Office / Office européen des brevets**

(11) **EP 2 696 413 A1**

(12) # EUROPEAN PATENT APPLICATION
published in accordance with Art. 153(4) EPC

(43) Date of publication:
**12.02.2014 Bulletin 2014/07**

(21) Application number: **12768396.9**

(22) Date of filing: **06.04.2012**

(51) Int Cl.:
*H01M 4/86* (2006.01)          *H01M 8/02* (2006.01)
*H01M 8/10* (2006.01)

(86) International application number:
**PCT/JP2012/059533**

(87) International publication number:
**WO 2012/137925 (11.10.2012 Gazette 2012/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.04.2011   JP 2011084379**
            **16.06.2011   JP 2011134280**

(71) Applicant: **Nissan Motor Co., Ltd**
**Yokohama-shi, Kanagawa 221-0023 (JP)**

(72) Inventors:
• **KOTAKA, Toshikazu**
  **Atsugi-shi, Kanagawa 243-0123 (JP)**
• **TABUCHI, Yuichiro**
  **Atsugi-shi, Kanagawa 243-0123 (JP)**
• **FUKUYAMA, Yosuke**
  **Atsugi-shi, Kanagawa 243-0123 (JP)**

(74) Representative: **Grünecker, Kinkeldey, Stockmair & Schwanhäusser**
**Leopoldstrasse 4**
**80802 München (DE)**

(54)    **FUEL CELL**

(57)    Provided is a fuel cell including: a membrane electrode assembly; a pair of gas diffusion layers holding the membrane electrode assembly therebetween; and a pair of separators holding the membrane electrode assembly and the pair of gas diffusion layer therebetween. The separators have ribs on surfaces facing the gas diffusion layers, the ribs forming channels which are gas flow paths. A thickness t ($\mu$m) of each of the gas diffusion layers and an area occupation ratio $S_C$ (-) of the channels on the surface facing the gas diffusion layer satisfy the relationship represented by the following formula (1):

$$0.9 > S_C \geq 55(t-103)^2/1000000+0.3 \cdots (1).$$

FIG. 1

EP 2 696 413 A1

**Description**

TECHNICAL FIELD

The present invention relates to a fuel cell. More specifically, the present invention relates to a fuel cell which has both reduced oxygen transport resistance and reduced electron resistance, and which is capable of exhibiting high performances.

BACKGROUND ART

Conventionally, in order to improve performances of a fuel cell by improving the electrical conductivity of a diffusion layer of the fuel cell, research and development has been made on a gas diffusion layer including a gas diffusion region made of metal and a backing region which contains carbon and which may be arranged adjacent to an electrode of a fuel cell. Specifically, a gas diffusion layer has been proposed in which an electrically conductive region formed of a material different from those of a gas diffusion region and a backing region is provided between the gas diffusion region and the backing region (see Patent Literature 1).

CITATION LIST

PATENT LITERATURE

Patent Literature 1: Japanese Patent Application Publication No. 2005-32628

SUMMARY OF INVENTION

TECHNICAL PROBLEM

In a fuel cell using the gas diffusion layer described in Patent Document 1, the electrical conductivity of the gas diffusion layer is improved. However, improvement in oxygen transport resistance is not expected by the fuel cell, and the cell output is not sufficiently improved in some cases.
The present invention has been made in view of such a problem of the conventional technology. An object of the present invention is to provide a fuel cell which has both reduced oxygen transport resistance and reduced electron resistance, and which is capable of exhibiting high performances.

SOLUTION TO PROBLEM

The present inventors have conducted earnest study to achieve the above object, and consequently have found that the above object can be achieved by causing a thickness t ($\mu$m) of each of gas diffusion layers and an area occupation ratio Sc (-) of channels, which are gas flow paths, on a surface facing the gas diffusion layer in a fuel cell to satisfy a certain relationship, and by the like means. This finding has led to the completion of the present invention.
Specifically, a fuel cell of the present invention includes: a membrane electrode assembly; a pair of gas diffusion layers holding the membrane electrode assembly therebetween; and a pair of separators holding the membrane electrode assembly and the pair of gas diffusion layers therebetween. Each of the pair of separators has ribs on a surface facing a corresponding one of the gas diffusion layers, the ribs forming channels which are gas flow paths. In adidtion, a thickness t ($\mu$m) of each of the gas diffusion layers and an area occupation ratio $S_C$ (-) of the channels on the surface facing the gas diffusion layer satisfy a relationship represented by the following formula (1):

$$0.9 > S_C \geq 55(t-103)^2/1000000 + 0.3 \cdots (1).$$

BRIEF DESCRIPTION OF DRAWINGS

[Fig. 1] Fig. 1 is a view showing a fuel cell according to a first embodiment of the present invention, where part (A) is a cross-sectional view schematically showing the fuel cell, and part (B) is a view for explaining a definition of a length of a specific portion in a separator of the fuel cell.

[Fig. 2] Fig. 2 is an enlarged cross-sectional view schematically showing another example of the gas diffusion layer of the fuel cell of Fig. 1.

[Fig. 3] Fig. 3 is a graph showing electrical conductivity characteristics according to still another example of the gas diffusion layer of the fuel cell of Fig. 1.

[Fig. 4] Fig. 4 is a cross-sectional view schematically showing a fuel cell according to a second embodiment of the present invention.

[Fig. 5] Fig. 5 is a cross-sectional view schematically showing a fuel cell according to a third embodiment of the present invention.

[Fig. 6] Fig. 6 is a cross-sectional view schematically showing a fuel cell according to a fourth embodiment of the present invention.

[Fig. 7] Fig. 7 is a perspective view showing a fuel cell according to a fifth embodiment of the present invention.

[Fig. 8] Fig. 8 is a schematic view of a cross-section taken along the line VIII-VIII in Fig. 7.

[Fig. 9] Fig. 9 is a perspective view showing a fuel cell according to a sixth embodiment of the present invention.

[Fig. 10] Fig. 10 is a schematic view of a cross-section taken along the line X-X in Fig. 9.

[Fig. 11] Fig. 11 is a diagram for describing how to define a rib width $W_{Rcg}$ and a channel width $W_{Ccg}$ of the fuel cell according to the sixth embodiment of the present invention.

[Fig. 12] Fig. 12 is a diagram for describing how to define a rib width $W_{Rcg}$ and a channel width $W_{Ceg}$ in another example of the fuel cell according to the sixth embodiment of the present invention.

[Fig. 13] Fig. 13 is a graph showing equal-oxygen transport resistance curves.

[Fig. 14] Fig. 14 is a graph showing the relationship between oxygen transport resistance and values obtained by normalizing voltages at a vehicle rated current to a vehicle rated voltage.

[Fig. 15] Fig. 15 is a graph showing the relationship between area occupation ratio $S_C$ (-) of gas flow paths and resistance (-) normalized to a resistance in an ideal condition.

[Fig. 16] Fig. 16 is a graph showing the relationship between $W_C/(W_C+W_R)$ (-) and a difference (S/m) from oxygen transport resistance $TR_{req}$ required to secure a predetermined voltage.

[Fig. 17] Fig. 17 is a graph showing the relationship between the rib width $W_R$ (mm) and upper limit (-) of $W_C/(W_C+W_R)$.

[Fig. 18] Fig. 18 is a graph showing the relationship between $W_C/(W_C+W_R)$ (-) and a difference (S/m) from the oxygen transport resistance $TR_{req}$ required to secure a predetermined voltage in a case where the rib width is 1.0 (mm) and the electrical conductivity is varied.

[Fig. 19] Fig. 19 is a graph showing the relationship between $W_C/(W_C+W_R)$ (-) and a difference (S/m) from oxygen transport resistance $TR_{req}$ required to secure a predetermined voltage in a case where the rib width is 0.7 mm and the electrical conductivity is varied.

[Fig. 20] Fig. 20 is a graph showing upper limits (-) of $W_C/(W_C+W_R)$ for various electrical conductivities.

[Fig. 21] Fig. 21 is a graph showing the relationship between the electrical conductivities and slopes of the upper limits of $W_C/(W_C+W_R)$.

[Fig. 22] Fig. 22 is a graph showing performance evaluation results of examples.

DESCRIPTION OF EMBODIMENTS

A fuel cell according to one embodiment of the present invention will be described in detail with reference to the drawings. Note that dimensional ratios in the drawings referred to in the following embodiments are exaggerated for the sake of description, and may be different from the actual ratios in some cases.

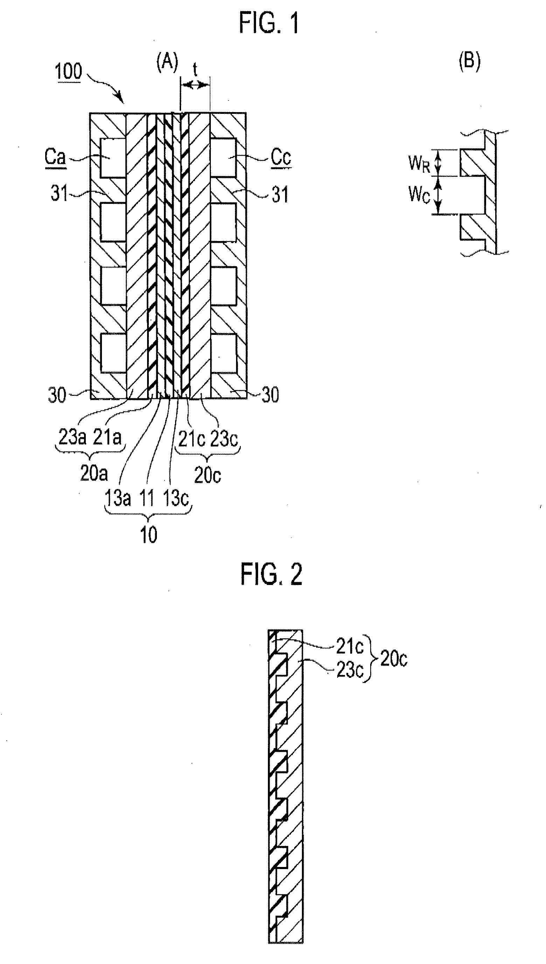

Fig. 1 is a view showing a fuel cell according to a first embodiment of the present invention, where part (A) is a cross-sectional view schematically showing the fuel cell, and part (B) is a view for explaining a definition of a length of a specific portion in a separator of the fuel cell.

As shown in Fig. 1, a fuel cell 100 of the first embodiment includes: a membrane electrode assembly 10; a pair of gas diffusion layers 20a and 20c holding the membrane electrode assembly 10 therebetween; and a pair of separators 30 holding the membrane electrode assembly 10 and the pair of gas diffusion layers 20a and 20c therebetween. Each of the pair of separators 30 has ribs 31 on a surface facing the gas diffusion layer 20a or 20c, the ribs forming channels Ca or Cc which are gas flow paths.

In addition, a thickness t ($\mu$m) of each of the gas diffusion layers 20a and 20c and an area occupation ratio Sc (-) of the channels on the surface facing the gas diffusion layer 20a or 20c satisfy the relationship represented by the following formula (1).

Note that since the channels are formed like multiple parallel straight lines in this example, the area occupation ratio Sc of the channels can be calculated by using a width $W_C$ (mm) of the channels and a width $W_R$ (mm) of the ribs from a definition of $S_C=W_C/(W_C+W_R)$. Moreover, when the channels are not formed like parallel straight lines, the area occupation ratio Sc of the channels can be calculated by specifically measuring the area occupation ratio Sc for individual cases.

$$0.9 > S_C \geq 55(t-103)^2/1000000+0.3 \quad \cdots (1)$$

Hereinafter, each constituent will be described in further detail.

[Membrane Electrode Assembly]

The membrane electrode assembly 10 has a structure in which an electrolyte membrane 11 is held between a pair of catalyst layers 13a and 13c. Conventionally known materials used for fuel cells can be used for the electrolyte membrane and the catalyst layers. Hereinafter, descriptions are made specifically.

(Electrolyte Membrane)

The electrolyte membrane 11 is made of, for example, a solid polymer electrolyte membrane. The solid polymer electrolyte membrane has a function to allow selective permeation of protons generated in an anode-side catalyst layer to a cathode-side catalyst layer in a membrane thickness direction during operation of a solid polymer-type fuel cell. Moreover, the solid polymer electrolyte membrane also has a function as a partition wall for preventing a fuel gas supplied on the anode side and an oxidizing agent gas supplied on the cathode side from mixing with each other.

Electrolyte membranes can be broadly classified into fluorine-containing polymer electrolyte membranes and hydrocarbon-based polymer electrolyte membranes according to the kind of an ion-exchange resin, which is a constituent material. Examples of ion-exchange resins constituting fluorine-containing polymer electrolyte membranes include perfluorocarbon sulfonic acid-based polymers such as Nafion (registered trademark, manufactured by DuPont), Aciplex (registered trademark, manufactured by Asahi Kasei Corporation), and Flemion (registered trademark, manufactured by Asahi Glass Co., Ltd.); perfluorocarbon phosphonic acid-based polymers; trifluorostyrenesulfanic acid-based polymers; ethylene tetrafluoroethylene-g-styrenesulfonic acid-based polymers; ethylene-tetrafluoroethylene copolymers; polyvinylidene fluoride-perfluorocarbon sulfonic acid-based polymers; and the like. These fluorine-containing polymer electrolyte membranes are preferably used from the viewpoint of improving electronic power generation performances such as heat resistance and chemical stability. Fluorine-containing polymer electrolyte membranes constituted of perfluorocarbon sulfonic acid-based polymers are particularly preferably used.

Specific examples of the hydrocarbon-based electrolytes include sulfonated polyether sulfone (S-PES), sulfonated polyarylether ketone, sulfonated polybenzimidazole alkyl, alkyl-sulfonated polybenzimidazol, phosphonated polybenzimidazole alkyl, alkyl-phosphonated polybenzimidazole, sulfonated polystyrene, sulfonated polyetheretherketone (S-PEEK), sulfonated polyphenylene (S-PPP), and the like. These hydrocarbon-based polymer electrolyte membranes are preferably used from the viewpoints of production that raw materials are inexpensive, production process are simple, and the selectivities of the materials are high. Note that only one of the above-described ion-exchange resins may be used alone, or two or more thereof may be used in combination. Moreover, the hydrocarbon-based electrolytes are not limited to the above-described materials, and other materials may be used.

The thickness of the electrolyte membrane may be determined as appropriate in consideration of characteristics of a fuel cell to be obtained, and is not particularly limited. The thickness of the electrolyte membrane is about 5 to 300 $\mu$m, in general. If the thickness of the electrolyte membrane takes a value within such a range, the balance among strength during film formation, durability during use, and output characteristics during use can be controlled appropriately.

(Catalyst Layers)

The catalyst layers 13a and 13c each include, for example, a catalyst component, an electrically conductive catalyst support which supports the catalyst component, and an electrolyte. Hereinafter, a composite material in which the catalyst component is support on the catalyst support is also referred to as an "electrode catalyst". The catalyst layers (an anode-side catalyst layer and a cathode-side catalyst layer) are layers in which the cell reactions proceed actually. Specifically, oxidation reaction of hydrogen proceeds in the anode catalyst layer, whereas reduction reaction of oxygen proceeds in the cathode catalyst layer.

The catalyst component used in the anode-side catalyst layer is not particularly limited, as long as the catalyst component has a catalytic action on the oxidation reaction of hydrogen. Conventionally known catalysts can be used similarly. Moreover, the catalyst component used in the cathode-side catalyst layer is not particularly limited, neither, as long as the catalyst component has a catalytic action on the reduction reaction of oxygen. Conventionally known catalysts can be used similarly. Specifically, the catalyst component can be selected from metals such as platinum (Pt), raflienium (Ru), iridium (Ir), rhodium (Rh), palladium (Pd), osmium (Os), tungsten (W), lead (Pb), iron (Fe), chromium (Cr), cobalt (Co), nickel (Ni), manganese (Mn), vanadium (V), molybdenum (Mo), gallium (Ga), and aluminum (Al), alloys thereof, and the like.

Of these catalyst components, it is desirable to use a catalyst component containing at least platinum to improve catalytic activity, poisoning resistance against carbon monoxide and the like, heat resistance, and the like. Note that the composition of the alloy is preferably such that the content of platinum be 30 to 90 atomic %, and the content of a metal alloyed with the platinum be 10 to 70 atomic %, although the preferable composition varies depending on the kind of the metal to be alloyed. Note that, in general, an alloy is a generic name for materials which are obtained by adding one or more metal elements or non-metal elements to a metal element, and which have metallic nature. The structure of an alloy may be a eutectic alloy which is, so to speak, a mixture in which the component elements form crystals independently of each other, one in which the component elements are completely dissolved in each other to form a solid solution, one in which the component elements form a intermetallic compound or a metal-non metal compound, or the like. In the present invention, the alloy may have any of these structures. Here, the catalyst component used in the anode-side catalyst layer and the catalyst component used in the cathode-side catalyst layer can be selected, as appropriate, from the above-described catalyst components. In this DESCRIPTION, the definition of catalyst component is the same between the catalyst component for the anode-side catalyst layer and the catalyst component for the cathode-side catalyst layer, unless otherwise noted. Hence, these catalyst components are collectively referred to as a "catalyst component." However, the catalyst components of the anode-side catalyst layer and the cathode-side catalyst layer do not need to be the same, and can be selected as appropriate to achieve the above-described desired effects.

The shape and the size of the catalyst component are not particularly limited, and a shape and a size which are the same as those of a conventionally known catalyst component can be employed. However, the shape of the catalyst component is preferably a particulate form. An average particle diameter of catalyst particles is preferably 1 to 30 nm. If the average particle diameter of the catalyst particles takes a value within such a range, the balance between the easiness of the supporting and a catalyst utilization associated with an effective electrode area in which the electrochemical reaction proceeds can be controlled appropriately. Note that the "average particle diameter of catalyst particles" in the present invention can be measured as a crystallite diameter found from a half width of a diffraction peak of the catalyst component in X-ray diffraction, or an average value of particle diameters of the catalyst component found from a transmission electron microscope image.

The catalyst support functions as a support for supporting the above-described catalyst component, and as an electron transfer path involved in exchange of electrons between the catalyst component and other members. The catalyst support only needs to have a specific surface area for the support of the catalyst component in a desired dispersion stale, and to have a sufficient electrical conductivity. A main component of the catalyst support is preferably carbon.

Specific examples include carbon particles made of carbon black, activated carbon, coke, naturally occurring graphite, artificial graphite, or the like. Note that the phrase "a main component is carbon" means that carbon atoms are contained as a main component, and is a concept including both "consisting of only carbon atoms" and "consisting substantially of carbon atoms." In some cases, elements other than carbon atoms may be contained to improve characteristics of the fuel cell. Note that the phrase "consisting substantially of carbon atoms" means that inclusion of about 2 to 3% by mass or less of impurities is acceptable.

The BET specific surface area of the catalyst support only needs to be a specific surface area sufficient for the catalyst component to be highly dispersed on the support, and is preferably 20 to 1600 $m^2$/g, and more preferably 80 to 1200 $m^2$/g. If the specific surface area of the catalyst support takes a value within such a range, the balance between dispersibility of the catalyst component on the catalyst support and an efficient utilization ratio of the catalyst component can be controlled appropriately.

The size of the catalyst support is not particularly limited, neither. The average particle diameter of the catalyst support may be about 5 to 200 nm, and preferably about 10 to 100 nm from the viewpoint of controlling the easiness of the supporting, the catalyst utilization, and the thickness of the catalyst layer within appropriate ranges, and the like.

The amount of the catalyst component supported in the electrode catalyst in which the catalyst component is supported on the catalyst support is preferably 10 to 80% by mass, and more preferably 30 to 70% by mass, relative to the entire amount of the electrode catalyst. If the amount of the catalyst component supported takes a value within such a range, the balance between catalytic performances and the degree of dispersion of the catalyst component on the catalyst support can be controlled appropriately. Note that the amount of the catalyst component supported in the electrode catalyst can be measured by inductively coupled plasma emission spectrometry (ICP).

The catalyst layer includes an ion-conducting polymer electrolyte, in addition to the electrode catalyst. The polymer electrolyte is not particularly limited, and reference can be made to conventional knowledge as appropriate. For example, the ion-exchange resin constituting the above-described polymer electrolyte layer can be added to the catalyst layer as the polymer electrolyte.

[Gas Diffusion Layers]

The gas diffusion layers (the anode-side gas diffusion layer 20a and the cathode-side gas diffusion layer 20c) each having a structure in which a gas diffusion layer-backing layer 21a or 21c and a gas diffusion layer substrate layer 23a or 23c are stacked on each other. The gas diffusion layer has a junction of promoting diffusion of a gas (a fuel gas or an oxidizing agent gas) supplied through the channels, which are gas flow paths, of the separator to the catalyst layer, and a function as an electron transfer path.

(Gas Diffusion Layer-Backing Layers)

The gas diffusion layer-backing layers 21a and 21c each have, for example, a structure made of an aggregate of carbon particles containing carbon and a water-repellent material to further improve the water repellency. Such a gas diffusion layer-backing layer is referred to as a microporous layer (MPL).

The carbon is not particularly limited, and a conventionally known material such as carbon black, graphite, or expanded graphite can be used as appropriate. In particular, a carbon black such as oil-furnace black, channel black, lamp black, thermal black, or acetylene black is preferably used, because of the excellent electron conductivity and the large specific surface area. The average particle diameter of the carbon particles is preferably about 10 to 100 nm. This makes it possible to obtain a high water-draining property due to capillary force, and improve contact property with the catalyst layer.

The water-repellent material is not particularly limited, as long as the water-repellent material is capable of further increasing the water repellency to suppress or prevent the flooding phenomena and the like. Specific examples of the water-repellent material include fluorine-containing polymer materials such as polytetrafluoroethylene (PTFE), polyvinylidene fluoride (PVdF), polyhexafluoropropylene, and tetrafluoroethylene-hexafluoropropylene copolymers; and olefin-based polymer materials such as polypropylene and polyethylene, In particular, a fluorine-containing polymer material is preferably used because of excellence in water repellency, corrosion resistance during the electrode reaction, and the like.

The mixing ratio of the carbon and the water-repellent material in the gas diffusion layer-backing layer is preferably about 90:10 to 40:60 (carbon:water-repellent material) in terms of mass ratio, in consideration of the balance between the water repellency and the electron conductivity. Note that the electrical conductivity can be made anisotropic by using vapor phase grown carbon, carbon fiber, or carbon nanotube, by adjusting the orientation of the carbon contained, or by other means. In addition, the thickness of the gas diffusion layer-backing layer is described later.

Note that the gas diffusion layer-backing layer may contain materials other than the carbon and the water-repellent material. Conventionally known materials used for gas diffusion layers can be employed for the gas diffusion layer-backing layer.

(Gas Diffusion Layer Substrate Layers)

A material constituting each of the gas diffusion layer substrate layers 23a and 23c is not particularly limited, and conventionally known materials can be used. Examples of the materials include electrically conductive and porous carbon materials such as woven fabrics, paper sheet-like articles, felt, nonwoven fabrics which are made of carbon; and electrically conductive and porous metal materials (porous metal materials) such as foam metals, expanded metals, punched metals, etching plates, precision press plates, metal gauzes, metal meshes, and sintered metal wires. One of these materials may be used alone, or two or more thereof may be used in combination. In addition, these porous metal materials are also advantageous in that the thickness, the porosity, and the like thereof can be easily controlled during production. The thickness of the gas diffusion layer substrate layer will be described later.

The fuel cell of this embodiment is desirably such that the gas diffusion layer-backing layers contain the carbon and the water-repellent material, and the gas diffusion layer substrate layers contain the porous metal material.

The employment of such a structure makes it possible to obtain a fuel cell having a further reduced electron resistance.

Note that, in the present invention, a gas diffusion layer-backing layer containing carbon and a water-repellent material should be understood to have a meaning including a gas diffusion layer-backing layer made of only carbon and a water-repellent material. Meanwhile, in the present invention, a gas diffusion layer substrate layer containing a porous metal material should be understood to have a meaning including a gas diffusion layer substrate layer made of only a porous metal material.

In addition, Fig. 2 is an enlarged cross-sectional view schematically showing another example of the gas diffusion layer. As shown in Fig. 2, for example, the gas diffusion layer 20c may contain carbon and a water-repellent material, which are materials constituting the gas diffusion layer-backing layer 21c, in pore portions of the gas diffusion layer substrate layer 23c. This is advantageous in that surface properties and the like in the pores can be controlled, and hence flooding resistance can be further improved.

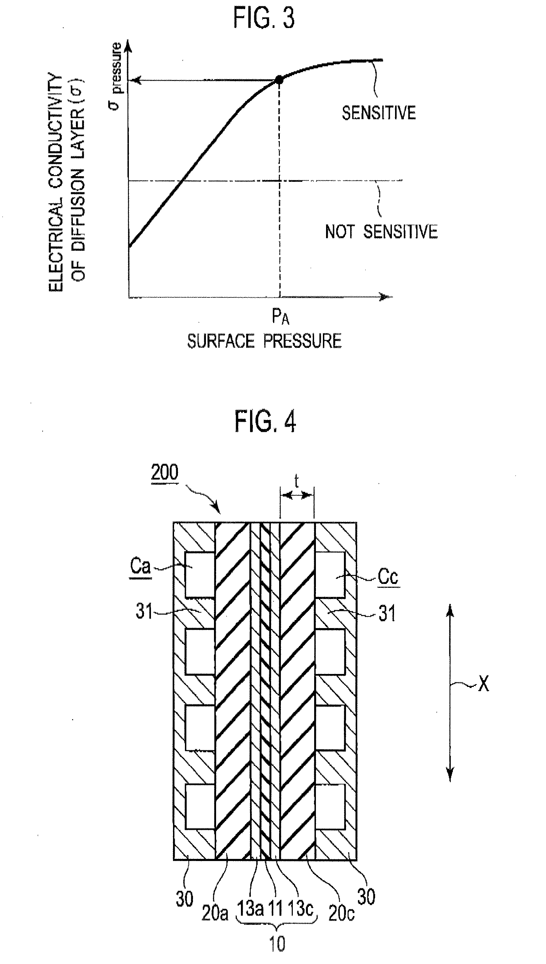

Furthermore, Fig. 3 is a graph showing electrical conductivity characteristics according to still another example of the gas diffusion layer.

When the gas diffusion layer is sensitive to a surface pressure in a thickness direction as shown by the solid line in Fig. 3 (for example, carbon or the like), an electrical conductivity $\sigma_{pressure}$ of the gas diffusion layer in a state where the fuel cell is formed is preferably employed as an electrical conductivity $\sigma$ of the gas diffusion layer in Formula (2), which will be described later. The state where the fuel cell is formed is a state where a surface pressure $P_A$ which is equal to a surface pressure applied in an assembled cell is applied to the gas diffusion layer. The employment of the electrical conductivity $\sigma_{pressure}$ as the electrical conductivity $\sigma$ in Formula (2) makes it possible to obtain a fuel cell which has further reduced oxygen transport resistance and further reduced electron resistance and which is capable of exhibiting higher performances, even when the gas diffusion layer is sensitive to the surface pressure in the thickness direction.

Note that the phrase "sensitive to a surface pressure" means that the electrical conductivity of the gas diffusion layer varies with change in surface pressure applied to the gas diffusion layer.

Note that the dashed-dotted line in Fig. 3 represents an example of a gas diffusion layer (for example, a porous metal material or the like) not sensitive to the surface pressure. As a matter of course, such a gas diffusion layer not sensitive to the surface pressure in the thickness direction can be employed for the fuel cell of the present invention.

[Separators]

The separators 30 hold the membrane electrode assembly 10 and the pair of gas diffusion layers 20a and 20c therebetween. In addition, each of the separators 30 has the ribs 31 on the surface facing the gas diffusion layer 20a or 20c, the ribs 31 forming channels Ca or Cc, which are gas flow paths.

Note that a material constituting the separators is not particularly limited, and conventionally known materials can be used. The material constituting the separators is desirably a material which does not readily allow permeation of the gas supplied, and is desirably a material which readily allows a current taken out by the cell reaction to flow therethrough. Specific examples of the material include metal materials such as iron, titanium, aluminum, and alloys thereof; polymer materials (electrically conductive plastics) provided with electrical conductivity by various metal materials, carbon materials, or the like; and the like. Note that iron alloys include stainless steels.

The fuel cell in this embodiment is desirably one in which each of the gas diffusion layers is joined to or adhered under pressure to one or both of the membrane electrode assembly and the separator.

The employment of such a structure makes it possible to reduce the contact resistances at interfaces, and, in turn, makes it possible to obtain a fuel cell which has further reduced oxygen transport resistance and further reduced electron resistance, and which is capable of exhibiting higher performances.

Here, for example, cold pressing, hot pressing, plastic-welding, metal-welding, diffusion bonding, or the like can be utilized for the joining or the adhesion under pressure. One of them may be used alone, or two or more thereof may be used in combination.

Moreover, Fig. 4 is a cross-sectional view schematically showing a fuel cell according to a second embodiment of the present invention. Note that the same constituents as those described in the first embodiment are denoted by the same reference signs, and descriptions thereof are omitted.

A fuel cell 200 of the second embodiment has the same structure as that of the above-described fuel cell of the first embodiment, except that gas diffusion layers each including a single layer are employed as the pair of gas diffusion layers 20a and 20c. The employment of the gas diffusion layers each including a single layer as the pair of gas diffusion layers 20a and 20c is advantageous in that the structure can be simplified and the costs can be reduced. Note that one of the materials constituting the gas diffusion layer-backing layer or constituting the gas diffusion layer substrate layer may be employed as the material constituting the gas diffusion layers. Alternatively, a combination of the materials constituting the gas diffusion layer-backing layer and the material constituting the gas diffusion layer substrate layer may be employed as appropriate.

In addition, when the electrical conductivity of the gas diffusion layers is anisotropic, it is appropriate to employ an electrical conductivity $\sigma_{inplane}$ in a width direction of the ribs indicated by the arrows X in Fig. 4 as the electrical conductivity $\sigma$ of the gas diffusion layer in Formula (2), which will be described later. The employment of the electrical conductivity $\sigma_{inplane}$ as the electrical conductivity $\sigma$ in Formula (2) makes it possible to obtain a fuel cell which has further reduced oxygen transport resistance and further reduced electron resistance, and which is capable of exhibiting higher performances, even when the electrical conductivity of the gas diffusion layer is anisotropic.

Note that when the electrical conductivity of the gas diffusion layer is not anisotropic, i.e., when the electrical conductivity is isotropic, an electrical conductivity in any direction may be employed.

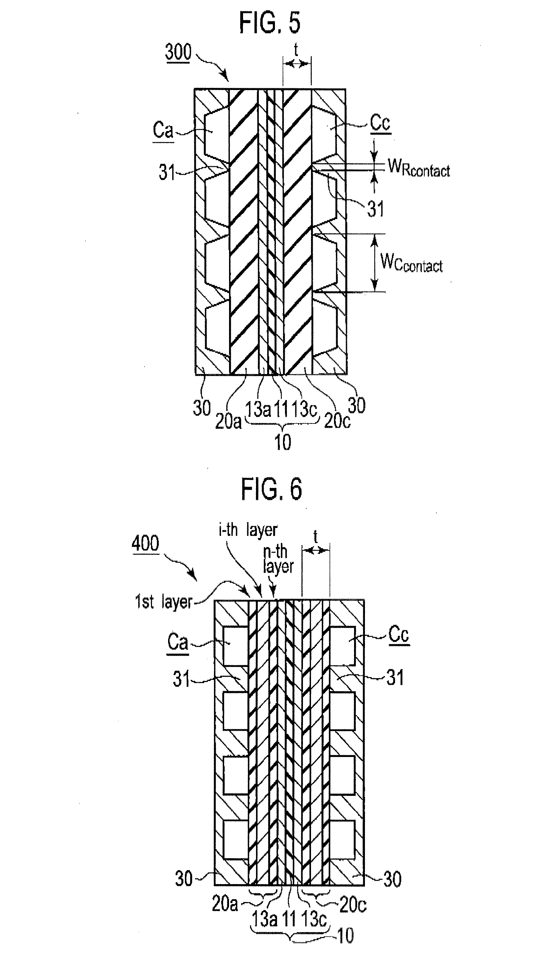

Furthermore, Fig. 5 is a cross-sectional view schematically showing a fuel cell according to a third embodiment of the present invention. Note that the same constituents as those described in the first embodiment are denoted by the same reference signs, and descriptions thereof are omitted.

A fuel cell 300 of the third embodiment has the same structure as that of the fuel cell of the first embodiment, except that gas diffusion layers each including a single layer are employed as the pair of gas diffusion layers 20a and 20c, and that the shapes of the channels in a cross-section approximately perpendicular to a gas flow direction in the separators are changed to non-rectangular shapes (trapezoidal shapes in this embodiment). In this case, it is appropriate to employ a width $W_{Rcontact}$ of a portion of one of the ribs in contact with the separator as the rib width $W_R$ in Formula (2), which will be described later. In addition, it is appropriate to employ a width $W_{Ccontact}$ of a portion of one of the channels facing the gas diffusion layer as the channel width $W_C$. The channel width $W_{Ccontact}$ is equivalent to the length of an edge in contact with the gas diffusion layer, among the edges forming the non-rectangular cross-section of the channel.

The employment of the rib width $W_{Rcontact}$ and the channel width $W_{Ccontact}$ as the rib width $W_R$ and the channel width $W_C$ in Formula (2) makes it possible to obtain a fuel cell which has further reduced oxygen transport resistance and further reduced electron resistance, and which is capable of exhibiting higher performances, even when the channel shapes in the cross-section approximately perpendicular to the gas flow direction in the separators are not rectangular shapes.

In addition, Fig. 6 is a cross-sectional view schematically showing a fuel cell according to a fourth embodiment of the present invention. Note that the same constituents as those described in the first embodiment are denoted by the same reference signs, and descriptions thereof are omitted.

A fuel cell 400 of the fourth embodiment has the same structure as that of the above-described fuel cell of the first embodiment, except that gas diffusion layers each including n layers (gas diffusion layers each having a n-layer structure in which the n layers are stacked on each other in the thickness direction) are employed as the pair of gas diffusion layers 20a and 20c. In this case, it is appropriate to employ an electrical conductivity $\sigma_{layered}$ calculated from the following formula (3) as the electrical conductivity $\sigma$ of the gas diffusion layer in Formula (2), which will be described later.

[Math. 1]

$$\sigma_{layered} = \sum_{i=1}^{n} \sigma_i \frac{t_i}{t} \quad \cdots (3)$$

where

σ $_{layered}$: the electrical conductivity (S/m) of the gas diffusion layer having the n-layer structure,
t: the thickness (μm) of the gas diffusion layer,
$\sigma_i$: an electrical conductivity (S/m) of an i-th layer in the gas diffusion layer, and
$t_i$: a thickness (μm) of the i-th layer in the gas diffusion layer.

The employment of the electrical conductivity $\sigma_{layered}$ as the electrical conductivity $\sigma$ in Formula (2) makes it possible to obtain a fuel cell which has further reduced oxygen transport resistance and further reduced electron resistance, and which is capable of exhibiting higher performances, even when the gas diffusion layers each having a n-layer structure in which the n layers are stacked on each other in the thickness direction.

Note that, as a matter of course, the fuel cell of the present invention is not limited to the case where the gas diffusion layers each having an n-layer structure in which the n layers are stacked on each other in the thickness direction. In addition, the above formula (3) can be extensively applied to a gas diffusion layer composed of a single layer. In this case, n takes an integer of 1 or greater. The formation of each of the gas diffusion layers from a single layer is preferable, for example, from the viewpoint of cost reduction because the structure can be simplified.

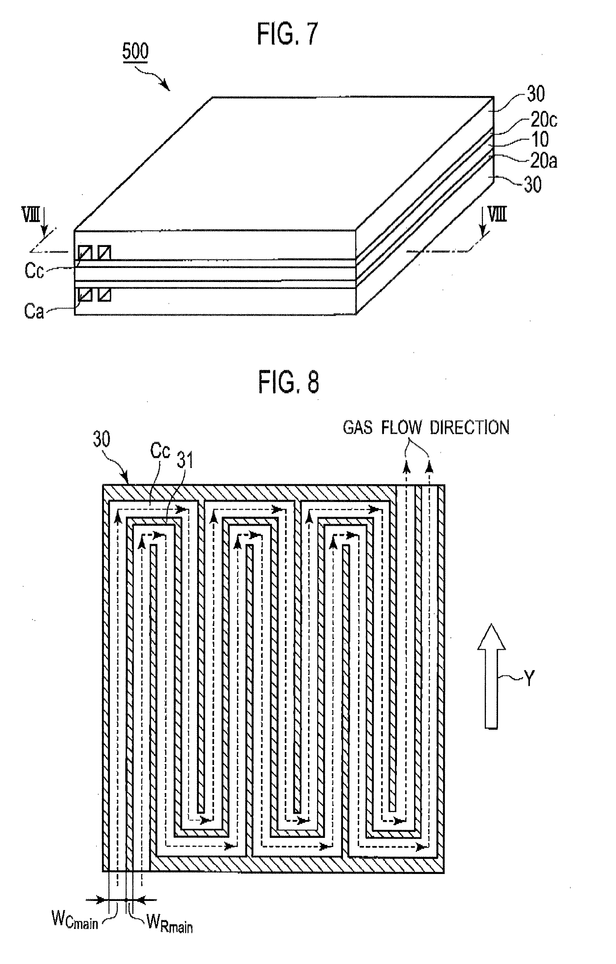

Furthermore, Fig. 7 is a perspective view showing a fuel cell according to a fifth embodiment of the present invention. Meanwhile, Fig. 8 is a schematic view of a cross-section taken along the line VIII-VIII in Fig. 7. Note that the same constituents as those described in the first embodiment are denoted by the same reference signs, and descriptions thereof are omitted.

A fuel cell 500 of the fifth embodiment has the same structure as that of the above-described fuel cell of the first embodiment, except that gas diffusion layers each including a single layer are employed as the pair of gas diffusion layers 20a and 20c, and that the gas flows in more than one direction in each of the separators.

In this embodiment channels are formed as so-called serpentine-type flow paths, as shown in Fig. 8, and the gas flows in more than one direction (three gas flow directions exist (an upward direction, a downward direction, and a rightward direction in the drawing)).

In this case, the direction accounting for the highest ratio (presence ratio) among the gas flow directions in the separator is defined as a main flow direction (the arrow Y in the example of Fig. 8). In addition, it is appropriate to employ a width $W_{Rmain}$ of one of the ribs in a cross-section approximately perpendicular to the main flow direction as the rib width $W_R$ in Formula (2), which will be described later. On the other hand, it is appropriate to employ a width $W_{Cmain}$ of one of the channels in a cross-section approximately perpendicular to the main flow direction as the channel width $W_C$ in Formula (2), which will be described later.

The employment of the rib width $W_{Rmain}$ and the channel width $W_{Cmain}$ as the rib width $W_R$ and the channel width $W_C$ in Formula (2) makes it possible to obtain a fuel cell which has further reduced oxygen transport resistance and further reduced electron resistance, and which is capable of exhibiting higher performances, even when, for example, serpentine-shaped flow paths are formed through which the gas flows in more than one direction in the separator.

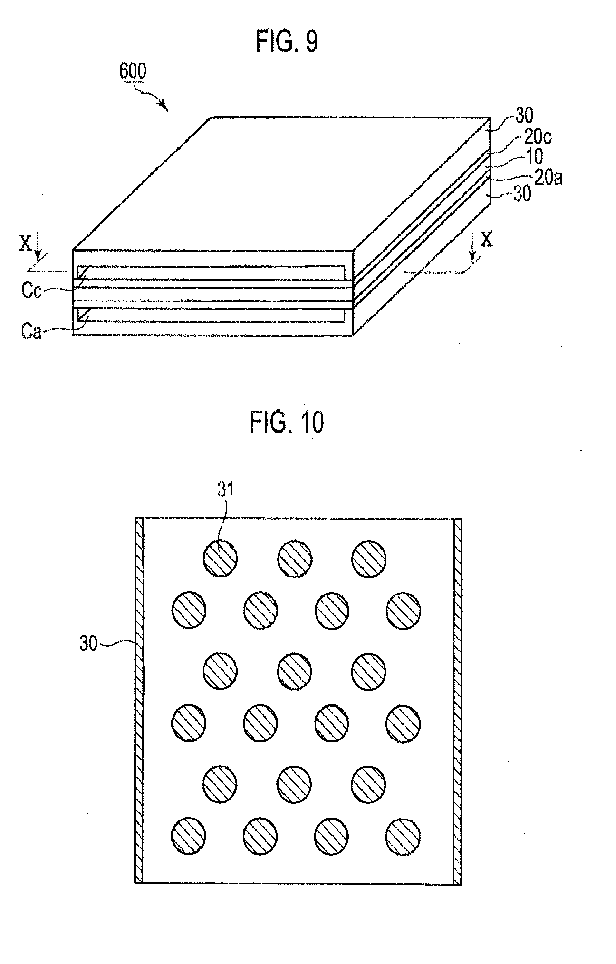

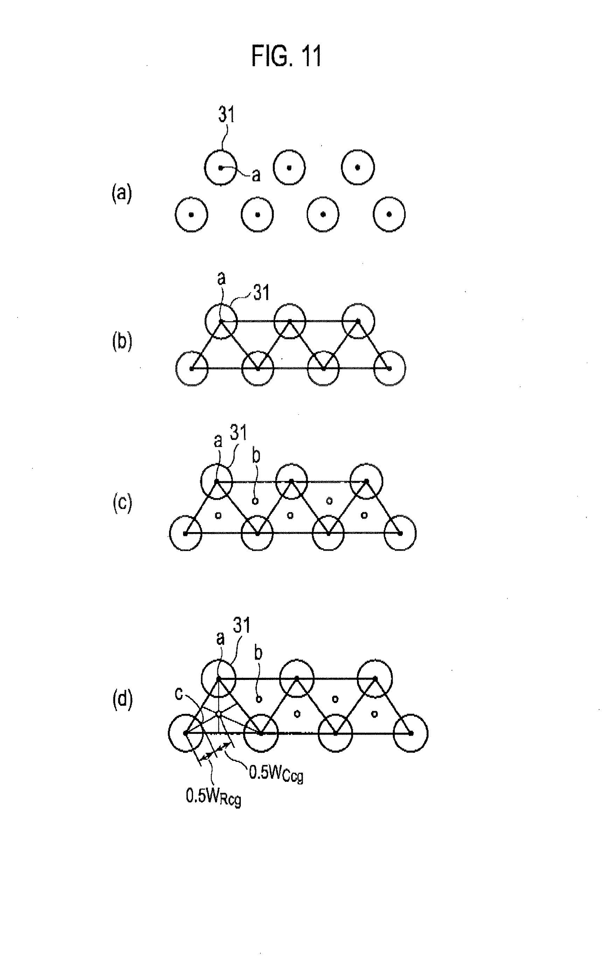

Fig. 9 is a perspective view showing a fuel cell according to a sixth embodiment of the present invention. Meanwhile, Fig. 10 is a schematic view of a cross-section taken along the line X-X in Fig. 9. Furthermore, Fig.11 is a diagram for describing how to defme a rib width $W_{Rcg}$ and a channel width $W_{Ccg}$ of the fuel cell according to the sixth embodiment of the present invention. Note that the same constituents as those described in the first embodiment are denoted by the same reference signs, and descriptions thereof are omitted.

A fuel cell 600 of the sixth embodiment has the same structure as that of the above-described fuel cell of the first embodiment, except that gas diffusion layers each including a single layer are employed as the pair of gas diffusion layers 20a and 20c, and that a rib arrangement pattern in a cross-section approximately perpendicular to a thickness direction of the ribs (a height direction of the ribs, the depth direction of the channels) is a dot-like arrangement pattern in which the same circular ribs 31 are arranged, while being uniformly dispersed.

Here, the "dot-like arrangement pattern" refers to a rib pattern in which multiple ribs are arranged in a dispersed manner to form channels by outlines of the ribs, and in which the shapes of the ribs can be regarded as dot-like shapes.

The phrase "a rib pattern in which the shapes of the ribs can be regarded as dot-like shapes" means an arrangement pattern in which a gas flow is hardly influenced even when the ribs whose shapes are circular shapes, elliptical shapes, fan shapes, triangular shapes, quadrangular or more polygonal shapes, or complex shapes formed by combining any ones of these shapes as appropriate are replaced with circular ribs circumscribed about the ribs. Note that examples of the arrangement pattern in which the gas flow is hardly influenced include those having a channel width/rib width ratio of 5 or higher.

Alternatively, the rib arrangement pattern in the cross-section approximately perpendicular to the thickness direction of the ribs may be an island-like arrangement pattern.

The "island-like arrangement pattern" refers to a rib pattern in which multiple ribs are arranged in a dispersed manner, so that outlines of the ribs form channels, and in which the shapes of the ribs cannot be regarded as dot-like shapes.

The phrase "a rib pattern in which the shapes of the ribs cannot be regarded as dot-like shapes" means an arrangement pattern in which a gas flow is influenced even when the ribs whose shapes are circular shapes, elliptical shapes, fan shapes, triangular shapes, quadrangular or more polygonal shapes, or complex shapes formed by combining any ones of these shapes as appropriate are replaced with circular ribs circumscribed about the ribs. Note that examples of the arrangement pattern in which the gas flow is influenced include those having a channel width/rib width ratio less than 5.

Even when the rib arrangement pattern in the cross-section approximately perpendicular to the thickness direction of the ribs is a dot-like or island-like arrangement pattern, a rib width $W_{Rcg}$ and a channel width $W_{Ccg}$ can be defined as the rib width $W_R$ and the channel width $W_C$ in Formula (2), which will be described later, by drawing diagrams as shown in Fig. 11.

First, in Fig 11(a), a gravity center position a of each of the ribs 31 is calculated.

Next, in Fig. 11(b), multiple triangles which are not overlapped with each other are formed by connecting the gravity center positions a with line segments.

Furthermore, in Fig. 11(c), a gravity center position b of each of the triangles is calculated.

After that, in Fig. 11(d), a line segment connecting the gravity center position a of one of the ribs 31 and the gravity center position b of one of the triangles having a vertex at the gravity center position a is divided into two pieces by the outline of the rib 31, and the length of one of the divided pieces of the line segment on the gravity center position a side is regarded as $0.5W_{Rcg}$, and the length of the piece on the gravity center position b side is regarded as $0.5W_{Ccg}$.

This is equivalent to an operation in which, in Fig. 11(d), a value obtained by multiplying the distance between the gravity center position a of the rib 31 and the intersection c of the outline of the rib 31 with the line segment connecting the gravity center position a of the rib 31 and the gravity center position b of the triangle by 2 is regarded as a rib width $W_{Rcg}$, and a value obtained by multiplying the distance between the intersection c and the gravity center position b of the triangle by 2 is regarded as a channel width $W_{Ccg}$.

The employment of the rib width $W_{Rcg}$ and the channel width $W_{Ccg}$ as the rib width $W_R$ and the channel width $W_C$ in Formula (2) makes it possible to obtain a fuel cell which has further reduced oxygen transport resistance and further reduced electron resistance, and which is capable of exhibiting higher performances, even when the rib arrangement pattern in the cross-section approximately perpendicular to the thickness direction of the ribs is a dot-like or island-like arrangement pattern.

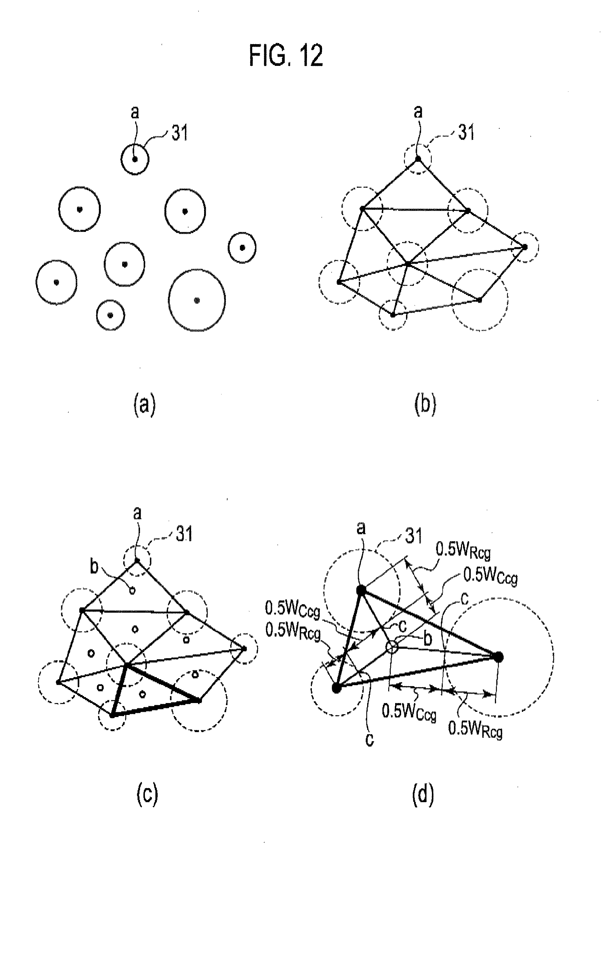

Furthermore, Fig. 12 is a diagram for describing how to define a rib width $W_{Rcg}$ and a channel width $W_{Ccg}$ in another example of the fuel cell according to the sixth embodiment of the present invention.

Note that the same constituents as those described in the first embodiment are denoted by the same reference signs, and descriptions thereof are omitted.

A fuel cell according to this example has the same structure as that of the above-described fuel cell of the first embodiment, except that gas diffusion layers each including a single layer are employed as the pair of gas diffusion layers 20a and 20c, and that a rib arrangement pattern in a cross-section approximately perpendicular to the thickness direction of the ribs is a dot-like arrangement pattern in which circular ribs 31 having mutually different sizes are arranged while being non-uniformly dispersed. Note that the rib arrangement pattern in the cross-section approximately perpendicular to the thickness direction of the ribs may be an island-like arrangement pattern in which the ribs are non-uniformly dispersed.

Even when the ribs in a dot-like or island-like arrangement pattern are arranged in a non-uniformly dispersed manner, rib widths $W_{Rcg}$ and channel widths $W_{Ccg}$ as described above can be defined as the rib width $W_R$ and the channel width $W_C$ in Formula (2), which will be described later, by drawing diagrams as shown in Fig. 12. Then, it is preferable to employ those which gives a smallest $W_{Ccg}/(W_{Ccg}+W_{Rcg})$, among these rib widths $W_{Rcg}$ and channel widths $W_{Ccg}$.

First, in Fig. 12(a), a gravity center position a of each of the ribs 31 is calculated.

Next, in Fig. 12(b), multiple triangles which are not overlapped with each other are formed by connecting the gravity center positions a with line segments.

Furthermore, in Fig. 12(c), a gravity center position b of each of the triangles is calculated.

After that, in Fig. 12(d), some triangles are examined. A line segment connecting the gravity center position a of one of the ribs 31 and the gravity center position b of one of the triangles having a vertex at the gravity center position a is divided into two pieces by the outline of the rib 31. Then, the length of one of the divided pieces of the line segment on the gravity center position a side is regarded as $0.5W_{Rcg}$, and the length of the piece on the gravity center position b is regarded as $0.5W_{Ccg}$. The $0.5W_{Ccg}$ and the $0.5W_{Rcg}$ are calculated for all the ribs.

This is equivalent to an operation in which, in Fig. 12(d), a value obtained by multiplying the distance between the gravity center position a of the rib 31 and the intersection c of the outline of the rib 31 with the line segment connecting the gravity center position a of the ribs 31 and the gravity center position b of the triangle by 2 is regarded as a rib width $W_{Rcg}$, and a value obtained by multiplying the distance between the intersection c and the gravity center position b of the triangle by 2 is regarded as a channel width $W_{Ccg}$.

The $0.5W_{Ccg}$ and the $0.5W_{Rcg}$ are calculated for all the ribs in this manner. After that, it is appropriate to employ those which give a smallest $W_{Ccg}(W_{Ccg}+W_{Rcg})$ among the calculated values of $W_{Ccg}$ and $W_{Rcg}$, in this embodiment.

The employment of such a rib width $W_{Rcg}$ and a channel width $W_{Ccg}$ makes it possible to obtain a fuel cell which has further reduced oxygen transport resistance and further reduced electron resistance, and which is capable of exhibiting higher performances, even when the rib arrangement pattern in the cross-section approximately perpendicular to the thickness direction of the ribs is a dot-like or island-like arrangement pattern, and the ribs are non-uniformly dispersed.

In addition, as described above, the thickness t ($\mu$m) of each of the gas diffusion layers and the area occupation ratio $S_C$ (-) of the channels, which are gas flow paths, on the surface facing the gas diffusion layer in the fuel cell of the present invention satisfy the relationship represented by the following formula (1):

$$0.9 > S_C \geq 55(t-103)^2/1000000 + 0.3 \cdots (1).$$

The above formula (1) can be obtained as follows.

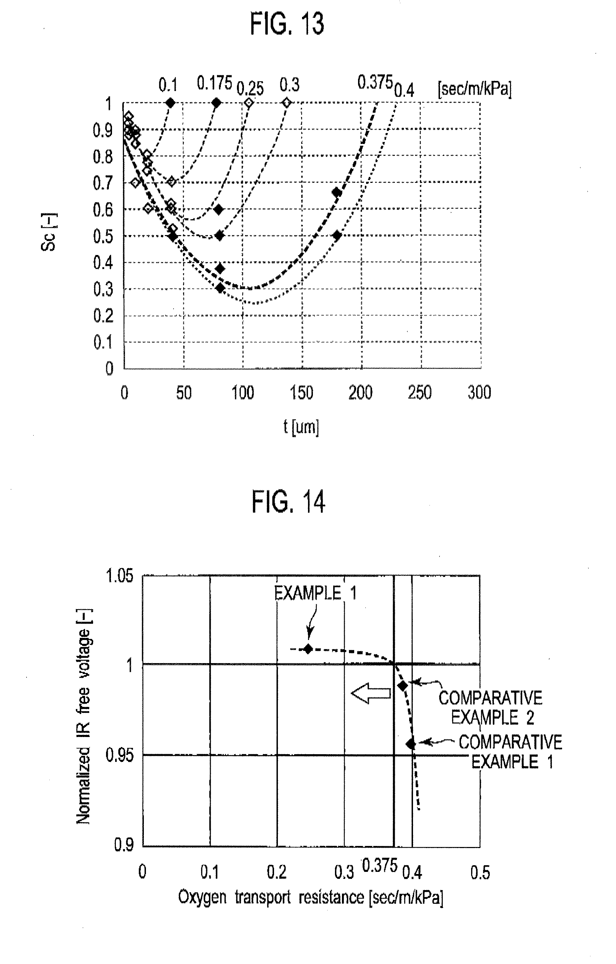

First, it has been experimentally revealed that when the thickness t ($\mu$m) of each gas diffusion layer and the area occupation ratio $S_C$ (-) of channels, which are gas flow paths, are changed in fuel cells having a structure as shown in Fig. 1, equal-oxygen transport resistance curves as shown in Fig. 13 are obtained. In other words, it has been experimentally revealed that when the oxygen transport resistance is constant, the area occupation ratio $S_C$ (-) of channels, which are gas flow paths, can be expressed as a quadratic curve of the thickness t ($\mu$m) of the gas diffusion layer.

Specifically, oxygen transport resistance values obtained under various conditions are plotted, with the horizontal axis representing the thickness t ($\mu$m) of the gas diffusion layer and the vertical axis representing the area occupation ratio $S_C$ (-) of the channels, which are gas flow paths. In this case, an equal-oxygen transport resistance curve connecting points having the same oxygen transport resistance value can be approximated as a quadratic function of the thickness t ($\mu$m) of the gas diffusion layer and the area occupation ratio $S_C$ (-) of the channels, which are gas flow paths, by the least-squares method.

Note that the oxygen transport resistance can be measured by the limiting current density method. Determination of oxygen transport resistance can be calculated by measuring a limiting current. As the fundamental principle, for example, the method described in ECS Transaction, Vol. 11(1), p. 529 (2007) can be used. In the expression here, the magnitude of limiting current is replaced with the magnitude of oxygen transport resistance.

In addition, the $S_C$ of a fuel cell having a structure as shown in Fig. 1 can be calculated from $W_C/(W_R+W_C)$.

By the way, in a case of a fuel cell vehicle, a predetermined voltage (a rated voltage) and a predetermined current (a rated current) are required to drive the vehicle with a motor. A stack operation point at which such a voltage is exhibited is referred to as a vehicle rated point.

Here, fuel cells having a structure as shown in Fig. 1 were fabricated to specifications of Example 1, Comparative Example 1, and Comparative Example 2, which will be described later. Oxygen transport resistance values measured for the fuel cells of the specifications are plotted on the horizontal axis, and the measured voltage values are plotted on the vertical axis. Specifically, for each of the fuel cells of the specifications, an oxygen transport resistance value measured by a limiting current density method is plotted on the horizontal axis, and a voltage value measured at the vehicle rated current and normalized to the vehicle rated voltage is plotted on the vertical axis. Thus, Fig. 14 is obtained. Note that the value of a voltage, at the vehicle rated current, normalized to the vehicle rated voltage can be measured by using, for example, an electronic load system.

Here, a factor which needs to be satisfied by a fuel cell for actual operation of a vehicle is to satisfy a condition of a vehicle rated point The phrase "to satisfy a condition of a vehicle rated point" means that an actual voltage of a fuel cell at the rated current value exceeds the rated voltage, in other words, a voltage value measured at the vehicle rated current and normalized to the vehicle rated voltage is not smaller than 1.

From Fig. 14, it can be understood that, in order to satisfy the condition of a vehicle rated point, in other words, to make the value normalized to the vehicle rated voltage not smaller than 1, the oxygen transport resistance value needs to be not larger than 0.375 sec/m/kPa.

Then, in order to make the oxygen transport resistance value not larger than 0.375 sec/m/kPa, the area occupation ratio $S_C$ of the channels, which are gas flow paths, needs to be not smaller than an area occupation ratio $S_C$ of channels calculated from the equal-oxygen transport resistance curve at the oxygen transport resistance value of 0.375 sec/m/kPa in Fig. 13. Here, the equal-oxygen transport resistance curve at an oxygen transport resistance value of 0.375 sec/m/kPa is represented by $S_C=55(t-103)^2/1000000+0.3$, where t is the thickness of the gas diffusion layer.

The fuel cells of the embodiments satisfy the relationship ($S_C \geq 55(t-103)^2/1000000+0.3$) on the right side of the above-described formula (1), so that the oxygen transport resistance value can be 0.375 sec/m/kPa or smaller.

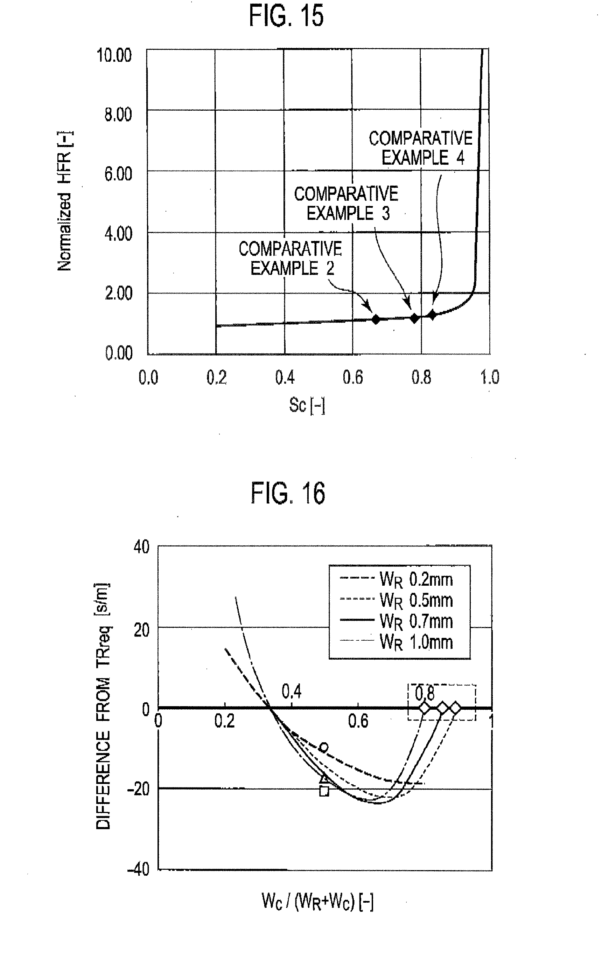

Furthermore, fuel cells having a structure as shown in Fig. 1 were fabricated to specifications of Comparative Example 2, Comparative Example 3, and Comparative Example 4, which will be described later. For each of the fuel cells of the specifications, an actually measured area occupation ratio Sc (-) of gas flow paths is plotted on the horizontal axis, and a cell resistance value is plotted on the vertical axis. Thus, these values can be represented as shown in Fig. 15. Here, the cell resistance value is, for example, a value obtained by normalizing a cell resistance value measured by an alternating-current four-terminal method using a milliohm high tester to an electrical resistance value in an ideal condition where the Sc is 0. Note that the ideal condition where the $S_C$ is 0 refers to a condition ideal for electron conduction, where the entire separator serves as a flow path for electrons, more specifically, refers to a condition where no channels, which are gas flow paths, exist in the separator.

As can be understood from Fig. 15, when the $S_C$ is 0.9 or greater, the resistance value steeply increases, resulting in reduced output. Note that, theoretically, the resistance value is infinity, when $S_C=1.0$.

Thus, the relationship ($0.9>S_C$) on the left side in the above-described formula (1) can be determined from Fig. 15.

Moreover, the fuel cells of the embodiments preferably satisfy, for example, the relationship represented by the following formula (2), as described above. Note that the right hand side in the following formula (2) means that the smaller one is selected from the value calculated from $(0.0755\ln(\sigma \cdot t/8000)-0.1525) \times W_R+0.9611)$ and 0.9.

[Math. 2]

$$\frac{W_C}{(W_C+W_R)} < \min\left( \left(0.0755\ln\left(\frac{\sigma \cdot t}{8000}\right)-0.1525\right)W_R+0.9611 \ , \ 0.9 \right) \cdots (2)$$

where

    $W_C$: channel width (mm),
    $W_R$: rib width (mm),

$\sigma$: electrical conductivity (S/m) of gas diffusion layer, and

t: thickness ($\mu$m) of gas diffusion layer.

A structure satisfying the relationship represented by the above-described formula (2) makes it possible to obtain a fuel cell which has further reduced oxygen transport resistance and further reduced electron resistance, and which is capable of exhibiting higher performances.

The above-described formula (2) can be obtained as follows.

In general, a minimum necessary voltage for operating a system such as a motor, an auxiliary, or the like is specified for a fuel cell (stack).

The oxygen transport resistance has a correlation with performances (voltage-current characteristics) of a fuel cell. From this correlation, a target value of the oxygen transport resistance $TR_{req}$ can be found which is required to secure the minimum necessary voltage. Specifically, in order to retain a voltage at a predetermined voltage or higher in a fuel cell (stack), the oxygen transport resistance needs to be smaller than the horizontal line of the value 0 in Fig. 16. The tendency of the oxygen transport resistance with respect to the area occupation ratio of channels (the oxygen transport resistance value with respect to the area occupation ratio of channels) varies depending on the rib width as shown in Fig. 16. Here, the term "the area occupation ratio of channels" is defined as "channel width /(rib width+channel width) $(=W_C/(W_R+W_C))$." Note that the details will be described later.

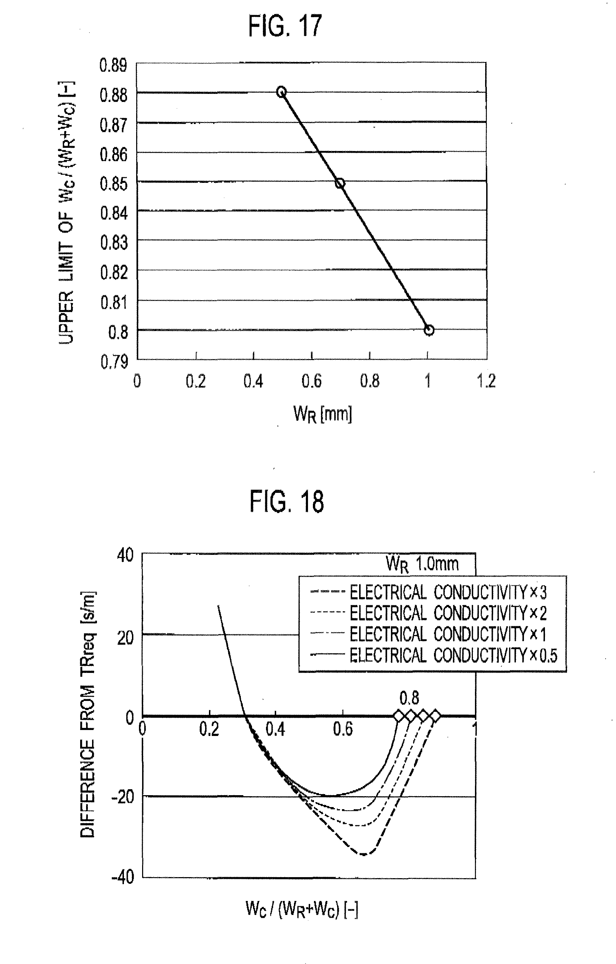

In addition, from the tendency shown in Fig. 16, an upper limit which can be taken by the area occupation ratio $W_C/(W_C+W_R)$ of channels to retain the voltage of the fuel cell (stack) at a predetermined voltage or higher can be calculated for each rib width, as shown in Fig. 17.

In other words, the area occupation ratio $W_C/(W_C+W_R)$ of channels needs to satisfy the following formula (4):

$$W_C/(W_R+W_C) < -0.1605 \times W_R + 0.9611 \cdots (4)$$

Note that the line segment shown in Fig. 17 is $W_C/(W_R+W_C) = -0.1605 \times W_R + 0.9611$.

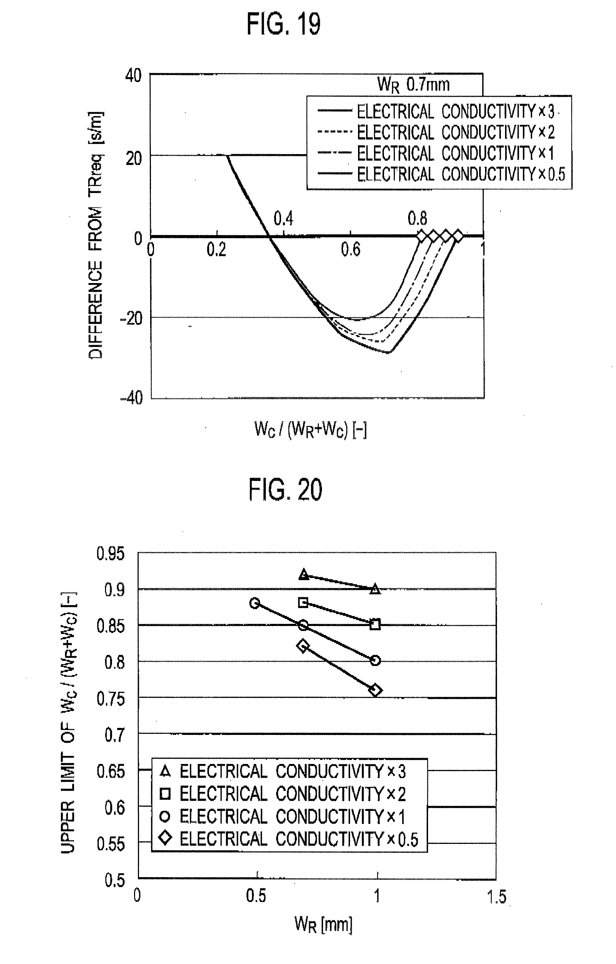

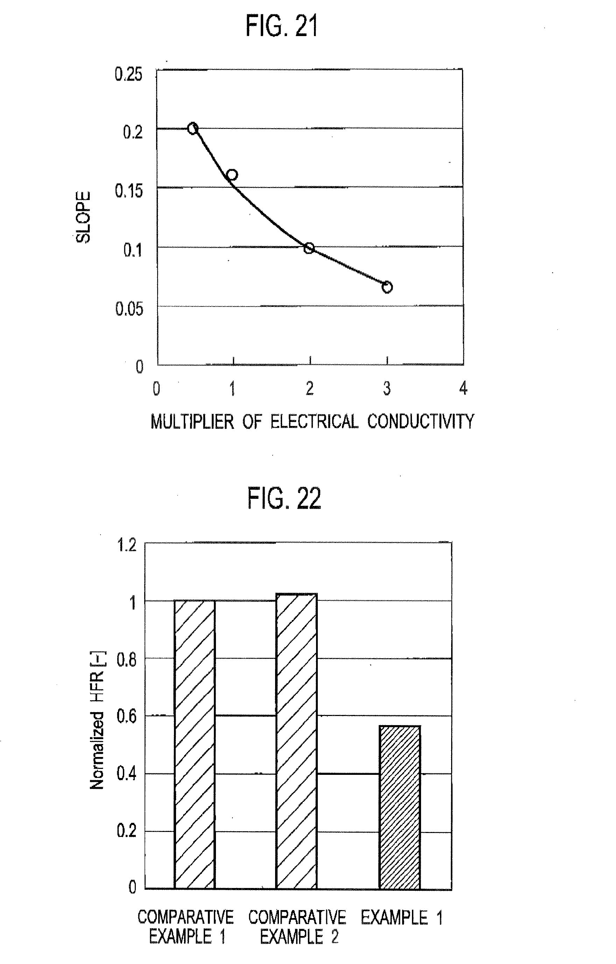

Furthermore, as shown in Figs. 18 and 19, the tendency of the oxygen transport resistance with respect to the area occupation ratio of channels also varies when the electron transport (the electrical conductivity) varies. Then, based on the same concept as that employed in obtaining the graph of Fig. 17, an upper limit which can be taken by the area occupation ratio $W_C/(W_C+W_R)$ of channels to retain the voltage of the fuel cell (stack) at a predetermined voltage or higher can be calculated for each rib width, as shown in Fig. 20. In addition, a relationship between the slopes (absolute values) of the straight lines in the graph of Fig. 20 and multipliers of electrical conductivity are as shown in Fig. 21.

The following formula (5), which is one part of the above-described relational formula (2), can be determined by reflecting the thus obtained relational formula of the slope on the above-described formula (4).

[Math. 3]

$$\frac{W_C}{(W_C+W_R)} < \left( 0.0755 \ln\left(\frac{\sigma \cdot t}{8000}\right) - 0.1525 \right) W_R + 0.9611 \cdots (5)$$

where

$W_C$: channel width (mm),

$W_R$: rib width (mm),

$\sigma$: electrical conductivity (S/m) of gas diffusion layer, and

t: thickness ($\mu$m) of gas diffusion layer.

Examples

Hereinafter, the present invention will be described in further detail based on Examples and Comparative Examples. However, the present invention is not limited to these Examples.

(Example 1)

First, a perfluorosulfonic acid-based electrolyte membrane was prepared as the electrolyte membrane, and a dispersion liquid containing a platinum-supporting carbon  was prepared as a slurry for forming the cathode-side and anode-side catalyst layers.

The slurry was applied onto the electrolyte membrane by using a spray coater, and calcined in an air atmosphere at 350°C for 30 minutes by using a calcination furnace. Thus, a membrane electrode assembly was fabricated.

Next, etching plates with a porosity of 0.44 were prepared as the cathode-side and anode-side gas diffusion layer substrate layers, and layers made of carbon powder and a water-repellent material (for example, polytetrafluoroethylene) were prepared as the gas diffusion layer-backing layers. Then, these layers were adhered to each other at a predetermined surface pressure. Thus, gas diffusion layers were fabricated.

Note that the gas diffusion layers had a thickness of 50 $\mu$m.

Furthermore, stainless steel (SUS) separators with $S_C$=0.67 were fabricated as the separators.

A fuel cell as shown in Fig. 1 was fabricated by using these members. Thus, a fuel cell of this example was obtained.

(Comparative Example 1)

Gas diffusion layers were fabricated by preparing common carbon paper sheets as the gas diffusion layer substrate layers, and repeating the same operations as those in Example 1.

Note that the gas diffusion layers had a thickness of 210 $\mu$m.

Furthermore, stainless steel (SUS) separators with $S_C$=0.5 were fabricated as the separators.

A fuel cell as shown in Fig. 1 was fabricated by repeating the same operations as those in Example 1, except that the gas diffusion layers and separators fabricated as above were used. Thus, a fuel cell of this example was obtained.

(Comparative Example 2)

Gas diffusion layers were fabricated by preparing common carbon paper sheets as the gas diffusion layer substrate layers, and by repeating the same operations as those in Example 1.

Note that the gas diffusion layers had a thickness of 210 $\mu$m.

Furthermore, stainless steel (SUS) separators with $S_C$=0.67 were fabricated as the separators.

A fuel cell as shown in Fig. 1 was fabricated by repeating the same operations as those in Example 1, except that the gas diffusion layers and separators fabricated as above were used. Thus, a fuel cell of this example was obtained.

(Comparative Example 3)

Gas diffusion layers were fabricated by preparing common carbon paper sheets as the gas diffusion layer substrate layers, and by repeating the same operations as those in Example 1.

Note that the gas diffusion layers had a thickness of 210 $\mu$m.

Furthermore, stainless steel (SUS) separators with $S_C$=0.78 were fabricated as the separators.

A fuel cell as shown in Fig. 1 was fabricated by repeating the same operations as those in Example 1, except that the gas diffusion layers and separators fabricated as above were used. Thus, a fuel cell of this example was obtained.

(Comparative Example 4)

Gas diffusion layers were fabricated by preparing common carbon paper sheets as the gas diffusion layer substrate layers, and by repeating the same operations as those in Example 1.

Note that the gas diffusion layers had a thickness of 210 $\mu$m.

Furthermore, stainless steel (SUS) separators with $S_C$=0.83 were fabricated as the separators.

A fuel cell as shown in Fig. 1 was fabricated by repeating the same operations as those in Example 1, except that the gas diffusion layers and separators fabricated as above were used. Thus, a fuel cell of this example was obtained.

(Example 2)

First, a perfluorosulfonic acid-based electrolyte membrane was prepared as the electrolyte membrane, and a dispersion liquid containing platinum-supporting carbon was prepared as a slurry for forming the cathode-side and anode-side catalyst layers.

The slurry was applied onto the electrolyte membranes by using a spray coater, and calcined in an air atmosphere at 350°C for 30 minutes by using a calcination furnace. Thus, a membrane electrode assembly was fabricated.

Next, layers (thickness: 80 $\mu$m) made of carbon powder and a water-repellent material (for example, polytetrafluoroethylene) were prepared as the cathode-side and anode-side gas diffusion layers. These layers were adhered at a predetermined surface pressure. Thus, gas diffusion layers were fabricated. Note that a measurement by a direct-current two-terminal method under a surface pressure at the time of cell assembly showed that the electrical conductivity of the gas diffusion layers was 100 S/m.

Furthermore, stainless steel (SUS) separators with a rib width $W_R$ of 0.7 mm, a channel width $W_C$ of 0.7 mm, and $S_C=0.5$ were fabricated as the separators.

A fuel cell as shown in Fig. 4 was fabricated by using these members. Thus, a fuel cell of this example was obtained.

(Example 3)

A fuel cell of this example was obtained by repeating the same operations as those in Example 2, except that stainless steel (SUS) separators with a rib width $W_R$ of 0.7 mm, a channel width $W_C$ of 1.8 mm, and $S_C=0.72$ were fabricated as the separators, and that a fuel cell as shown in Fig. 4 was fabricated by using these separators.

(Example 4)

A fuel cell of this example was obtained by repeating the same operations as those in Example 2, except that stainless steel (SUS) separators with a rib width $W_R$ of 0.5 mm, a channel width $W_C$ of 3.8 mm, and $S_C<0.9$ were fabricated as the separators, and that a fuel cell as shown in Fig. 4 was fabricated by using these separators.

(Example 5)

A fuel cell of this example was obtained by repeating the same operations as those in Example 2, except that stainless steel (SUS) separators with a rib width $W_R$ of 0.2 mm, a channel width $W_C$ of 1.7 mm, and $S_C<0.9$ were fabricated as the separators, and that a fuel cell as shown in Fig. 4 was fabricated by using these separators.

[Performance Evaluation]

By using the fuel cell of each of the above-described examples, performances of the fuel cell were evaluated under the following conditions. Specifically, a voltage was measured at a vehicle rated current by using an electronic load system, and normalized to a vehicle rated voltage. Fig. 14 shows the obtained results. Moreover, the resistance was measured by using a milliohm high tester, and normalized to the resistance of Comparative Example 1. Fig. 22 shows the obtained results

<Evaluation Conditions>

· Gas components: hydrogen (anode-side)/air (cathode-side)
· Cell temperature: 80°C
· R.H. (relative humidity): 100%RH

As shown in Fig. 14, the voltage value, at the vehicle rated current, normalized to the vehicle rated voltage of Example 1 which falls within the scope of the present invention was higher than those of Comparative Example 1 and Comparative Example 2 which are not within the scope of the present invention, and was not smaller than 1. In other words, Example 1 satisfies $S_C \geq 55(t-103)^2/1000000+0.3$, and achieved high performances at the rated current. Note that neither Comparative Example 1 nor Comparative Example 2 satisfies this condition as shown in Fig. 14. In addition, it can be seen that Example 1 had a reduced resistance, because the resistance of Example 1 normalized to the resistance of Comparative Example 1 is smaller than 1, as shown in Fig. 22. This was presumably because of the following reason. Specifically, reduction in oxygen transport distance and reduction in electron resistance were achieved by thickness reduction, while diffusion of oxygen to lower portions of the ribs in the separators is secured. Hence, influence of the thickness reduction on increase in oxygen transport resistance to the lower portions of the ribs is reduced, and further the performance was improved by reduction in concentration polarization and reduction in ohmic loss due to the reduction in the oxygen transport distance. In addition, since the metal etching plates were used as the substrates in Example 1, the electrical conductivity was improved. Furthermore, since part of the slurry for forming the gas diffusion layer-backing layers entered the pores of the metal etching plates in Example 1, the flooding resistance was improved. Furthermore, since the gas diffusion layers, the membrane electrode assembly, and the separators were adhered to each other by hot press under a predetermined pressure in Example 1, the electron resistance was reduced, and the performances were improved.

Moreover, Examples 2 to 5, which fall within the scope of the present invention, also satisfy $S_C \geq 55(t-103)^2/1000000+0.3$, and achieved high performances at the rated current. Furthermore, since Examples 2 to 5 have structures satisfying Formula (2) as described above, Example 2 to Example 5 can exhibit higher performances.

Note that the electrical conductivity of the gas diffusion layers is isotropic. However, even when the electrical conductivity is anisotropic, high performances can be exhibited more reliably by employing, for Formula (2), an electrical conductivity $\sigma_{inplane}$ in a rib width direction, which is the rate determining direction of the gas diffusion, as described above.

Moreover, even when channel shapes in a cross-section approximately perpendicular to a gas flow direction in the separators are not rectangular shapes, high performances can be exhibited more reliably by employing, for Formula (2), the rib width $W_{Rcontact}$ at a portion where a rib and a gas diffusion layer are in contact with each other in a gas diffusion rate determining direction, and by employing the channel width $W_{Ccontact}$ at a portion at which a channel and a gas diffusion layer face to each other as the channel width $W_C$ as described above.

Furthermore, even when the gas diffusion layers each have an n-layer structure in which the n layers are stacked on each other in the thickness direction, high performances can be exhibited more reliably by employing, for Formula (2), the electrical conductivity $\sigma_{layered}$ calculated from Formula (3), as described above.

Moreover, even when the gas diffusion layers are sensitive to the surface pressure in the thickness direction, high performances can be exhibited more reliably by employing, for Formula (2), the electrical conductivity $\sigma_{pressure}$ in a state where a fuel cell is formed as described above.

Furthermore, even when the gas flows in more than one direction in each of the separators, high performances can be exhibited more reliably by determining a direction accounting for a highest ratio among the gas flow directions in the separator as the main flow direction, and employing, for Formula (2), the rib width $W_{Rmain}$ and the channel width $W_{Rmain}$ in a cross-section approximately perpendicular to the main flow direction as described above.

Moreover, even when a rib arrangement pattern in a cross-section approximately perpendicular to the thickness direction of the ribs is a dot-like or island-like arrangement pattern, high performances can be exhibited more reliably by employing the rib width $W_{Rmain}$ and the channel width $W_{Rmain}$ calculated as described above.

The embodiments of the present invention are described above. However, these embodiments are mere examples described for the sake of facilitating the understanding of the present invention, and the present invention is not limited to these embodiments. The technical scope of the present invention is not limited to the specific technical matters disclosed in the above embodiments and the like, but include various alterations, modifications, alternative technologies, and the like which can be easily derived from these specific technical matters.

For example, the structure described in each of the above-described embodiments is not limited to the embodiment. For example, details or the structure of the separators or the gas diffusion layers may be altered, or the structure of each embodiment may be changed to a combination other than the combination in the above-described embodiment.

Moreover, for example, separators in which gas flow paths are formed like parallel straight lines are taken as examples in the description of Examples, but the present invention is not limited thereto. For example, even when the gas flow paths are of a serpentine type, the present invention is applicable by appropriately applying the formula for calculating the $S_C$ as described above.

This application claims priority from Japanese Patent Application No. 2011-084379 filed on April 6, 2011 and from Japanese Patent Application No. 2011-134280 filed on June 16, 2011, and the entire contents of those applications are incorporated herein by reference.

INDUSTRIAL APPLICABILITY

According to the present invention, an area occupation ratio $S_C$ (-) of channels, which are gas flow paths, on a surface facing a gas diffusion layer and a thickness t ($\mu$m) of the gas diffusion layer in a fuel cell satisfy the relationship represented by the above-described formula (1). For this reason, it is possible to provide a fuel cell which has both reduced oxygen transport resistance and reduced electron resistance, and which is capable of exhibiting high performances.

REFERENCE SIGNS LIST

| | |
|---|---|
| 100, 200, 300, 400, 500, 600 | fuel cell |
| 10 | membrane electrode assembly |
| 11 | electrolyte membrane |
| 13a | anode-side catalyst layer |
| 13c | cathode-side catalyst layer |

| 20a | anode-side gas diffusion layer |
|-----|-------------------------------|
| 20c | cathode-side gas diffusion layer |
| 21a | anode-side gas diffusion layer-backing layer |
| 21c | cathode-side gas diffusion layer-backing layer |
| 23a | anode-side gas diffusion layer substrate layer |
| 23c | cathode-side gas diffusion layer substrate layer |
| 30 | separator |
| 31 | rib |
| Ca | anode-side gas flow path (channel) |
| Cc | cathode-side gas flow path (channel) |

**Claims**

1. A fuel cell comprising:

   a membrane electrode assembly;
   a pair of gas diffusion layers holding the membrane electrode assembly therebetween; and
   a pair of separators holding the membrane electrode assembly and the pair of gas diffusion layers therebetween, wherein
   each of the pair of separators has ribs on a surface facing a corresponding one of the gas diffusion layers, the ribs forming channels which are gas flow paths, and
   a thickness t ($\mu$m) of each of the pair of gas diffusion layers and an area occupation ratio $S_C$ (-) of the channels on the surface facing the gas diffusion layer satisfy a relationship represented by the following formula (1):

$$0.9 > S_C \geq 55(t-103)^2/1000000 + 0.3 \cdots (1).$$

2. The fuel cell according to claim 1, wherein a width $W_C$ (mm) of the channels, a width $W_R$ (mm) of the ribs, an electrical conductivity $\sigma$ (S/m) of the gas diffusion layer, and a thickness t ($\mu$m) of the gas diffusion layer satisfy the relationship represented by the following formula (2):
   [Math. 1]

$$\frac{W_C}{(W_C + W_R)} < \min\left(\left(0.0755\ln\left(\frac{\sigma \cdot t}{8000}\right) - 0.1525\right)W_c + 0.9611 \quad , \quad 0.9 \quad\right) \cdots (2)$$

3. The fuel cell according to claim 2, wherein, when the electrical conductivity of the gas diffusion layer is anisotropic, an electrical conductivity in a width direction of the ribs is employed as the electrical conductivity $\sigma$ of the gas diffusion layer in Formula (2).

4. The fuel cell according to claim 2 or 3, wherein, when shapes of the channels in a cross-section approximately perpendicular to a gas flow direction in the separator are trapezoidal shapes, a width of portions of the ribs in contact with the gas diffusion layer is employed as the rib width $W_R$ in Formula (2), and a width of portions of the channels facing the gas diffusion layer is employed as the channel width $W_C$.

5. The fuel cell according to any one of claims 2 to 4, wherein, when the gas diffusion layer has an n-layer structure in which n layers are stacked on each other in a thickness direction, an electrical conductivity $\sigma_{layered}$ calculated from the following formula (3) is employed as the electrical conductivity $\sigma$ of the gas diffusion layer in Formula (2):
   [Math. 2]

$$\sigma_{layered} = \sum_{i=1}^{n} \sigma_r \frac{t_i}{t} \quad \cdots (3)$$

where

σ$_{layered}$: the electrical conductivity (S/m) of the gas diffusion layer having the n-layer structure,
t: the thickness (μm) of the gas diffusion layer,
σ$_i$: an electrical conductivity (S/m) of an i-th layer in the gas diffusion layer, and
t$_i$: a thickness (μm) of the i-th layer in the gas diffusion layer.

6. The fuel cell according to any one of claims 2 to 5, wherein, when the gas diffusion layer is sensitive to a surface pressure in a thickness direction, an electrical conductivity of the gas diffusion layer in a state where the fuel cell is formed is employed as the electrical conductivity σ of the gas diffusion layer in Formula (2).

7. The fuel cell according to any one of claims 2 to 6, wherein
when a gas flows in more than one direction in the separator,
a direction accounting for a highest ratio among gas flow directions in the separator is defined as a main flow direction,
a width of the ribs in a cross-section approximately perpendicular to the main flow direction is employed as the rib width $W_R$ in Formula (2), and
a width of the channels in the cross-section approximately perpendicular to the main flow direction is employed as the channel width $W_C$ in Formula (2).

8. The fuel cell according to any one of claims 2 to 6, wherein,
when a rib arrangement pattern, in a cross-section approximately perpendicular to a thickness direction of the ribs is a dot-like or island-like arrangement pattern,
a value obtained by calculating gravity center positions of the ribs and gravity center positions of triangles which are formed by connecting the gravity center positions of the ribs and which are not overlapped with each other, and multiplying one of distances between the gravity center positions of the ribs and intersections of outlines of the ribs and line segments connecting the gravity center positions of the ribs and the gravity center positions of the triangles by 2 is employed as the rib width $W_R$ in Formula (2), and
a value obtained by multiplying one of distances between the intersections and the gravity center positions of the triangles by 2 is employed as the channel width $W_C$ in Formula (2).

9. The fuel cell according to any one of claims 2 to 6, wherein
when a rib arrangement pattern in a cross-section approximately perpendicular to a thickness direction of the ribs is a dot-like or island-like arrangement pattern,
gravity center positions of the ribs and gravity center positions of triangles which are formed by connecting the gravity center positions of the ribs and which are not overlapped with each other are calculated,
rib widths $W_{Rcg}$ are obtained by multiplying distances between the gravity center positions of the ribs and intersections between outlines of the ribs and line segments connecting the gravity center positions of the ribs and the gravity center positions of the triangles by 2,
channel widths $W_{Ccg}$ are obtained by multiplying the distances between the intersections and the gravity center positions of the triangles by 2, and
among the rib widths $W_{Rcg}$ and the channel widths $W_{Ccg}$, those which give a smallest $W_{Ccg}/(W_{Ccg}+W_{Rcg})$ are employed as the rib width $W_R$ and the channel width $W_C$ in Formula (2).

10. The fuel cell according to any one of claims 1 to 9, wherein
the gas diffusion layer includes a gas diffusion layer-backing layer positioned on a side close to the membrane electrode assembly and a gas diffusion layer substrate layer positioned on a side close to the separator,
the gas diffusion layer-backing layer contains carbon and a water-repellent material, and
the gas diffusion layer substrate layer contains a porous metal material.

## FIG. 1

## FIG. 2

# FIG. 3

# FIG. 4

## FIG. 5

## FIG. 6

# FIG. 7

# FIG. 8

## FIG. 9

## FIG. 10

# FIG. 11

(a)

(b)

(c)

(d)

# FIG. 12

(a)

(b)

(c)

(d)

# FIG. 13

# FIG. 14

## FIG. 15

## FIG. 16

## FIG. 17

## FIG. 18

## FIG. 19

## FIG. 20

# FIG. 21

# FIG. 22

**INTERNATIONAL SEARCH REPORT**

| International application No. |
| --- |
| PCT/JP2012/059533 |

A.  CLASSIFICATION OF SUBJECT MATTER
*H01M4/86*(2006.01)i, *H01M8/02*(2006.01)i, *H01M8/10*(2006.01)n

According to International Patent Classification (IPC) or to both national classification and IPC

B.  FIELDS SEARCHED

Minimum documentation searched (classification system followed by classification symbols)
H01M4/86, H01M8/02, H01M8/10

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| A | JP 2004-87491 A  (Matsushita Electric Industrial Co., Ltd.), 18 March 2004 (18.03.2004), entire text & EP 1403947 A2      & US 2004/058223 A1 & KR 10-2004-0014273 A | 1-10 |
| A | JP 2005-276811 A  (Samsung SDI Co., Ltd.), 06 October 2005 (06.10.2005), entire text & US 2005/214625 A1     & KR 10-2005-0095157 A & CN 1674334 A | 1-10 |
| A | JP 2006-85932 A  (Nissan Motor Co., Ltd.), 30 March 2006 (30.03.2006), entire text (Family: none) | 1-10 |

☒  Further documents are listed in the continuation of Box C.     ☐  See patent family annex.

| | |
| --- | --- |
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 12 June, 2012 (12.06.12) | 19 June, 2012 (19.06.12) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

| INTERNATIONAL SEARCH REPORT | International application No. |
|---|---|
| | PCT/JP2012/059533 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2007-165287 A  (Sharp Corp.),<br>28 June 2007 (28.06.2007),<br>entire text<br>& US 2007/111082 A1 | 1-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005032628 A
- JP 2011084379 A
- JP 2011134280 A

**Non-patent literature cited in the description**

- *ECS Transaction,* 2007, vol. 11 (1), 529